# FASCICULE DE BREVET EUROPEEN

(11) **EP 2 569 735 B1**
(45) Date de publication et mention de la délivrance du brevet: **19.03.2014**
(21) Numéro de dépôt: 11723512.7
(22) Date de dépôt: 27.04.2011
(51) Int. Cl.: G06K 19/07, G07F 17/32, A63F 3/06

(54) **CARTE DE PAIEMENT COMPORTANT UNE PUCE DE JEU ELECTRONIQUE**
ZAHLUNGSKARTE MIT ELEKTRONISCHEM SPIELCHIP
PAYMENT CARD COMPRISING AN ELECTRONIC GAME CHIP

(30) Priorité: 10.05.2010 FR 1053636
(43) Date de publication de la demande: 20.03.2013
(73) Titulaire: UINT, 91190 Saint-Aubin (FR)
(72) Inventeur: BLOT, Philippe, F-78640 Neauphle le Château (FR); MOBETIE, Didier, F-78000 Versailles (FR); RENAUD, Jean-Charles, F-91640 Fontenay les Briis (FR); BOUHANNA, Eric, F-92380 Garches (FR)
(74) Mandataire: Pontet Allano & Associes
(86) Numéro de dépôt international: PCT/FR2011/050952
(87) Numéro de publication internationale: WO 2011/141659

(56) Documents cités:
- WO-A2-02/37928
- US-A- 4 764 666

## Description

La présente invention concerne une carte de paiement équipée d'une bande magnétique et/ou d'une puce électronique.

Une carte à puce est faite généralement en matière plastique ou carton selon un format standard tel que par exemple le format des cartes bancaires ISO 7810.

L'invention s'applique avantageusement, mais non limitativement, au domaine des jeux électroniques sur carte portative. Dans ce domaine, on connaît le document US 2008/0096624 décrivant une carte de jeu électronique comprenant des moyens d'affichages pour afficher le gain obtenu par un utilisateur et permettre le paiement de ce gain par une autorité. Une telle carte est équipée d'une puce électronique, de mémoire et d'une batterie. L'inconvénient d'un tel système est que l'utilisateur doit apporter sa carte vers une personne représentant l'autorité pour valider la carte. Or, un système de vérification automatisé apporterait une grande souplesse d'utilisation. Le problème technique posé dans l'art antérieur est donc le manque de moyen de communication électronique qui permettrait de transférer automatiquement les données contenues dans la mémoire vers un terminal.

On connait le document WO 02/37928 divulguant une carte de paiement au format d'une carte bancaire, comprenant un circuit intégré, une interface homme machine, un espace mémoire connecté au circuit intégré et une batterie d'alimentation. Cette carte est adaptée pour la mise en oeuvre d'un jeu électronique et permet de retirer le montant gagné à un distributeur automatique.

La présente invention a donc pour objet un nouveau système pour transférer de manière automatique et sécurisé les données contenues dans la mémoire d'une telle carte.

On atteint le but précité avec une carte de paiement constituée par un support au format d'une carte bancaire de paiement conventionnelle, et comprenant un premier circuit intégré dédié aux opérations bancaires. La carte selon l'invention comprend en outre :
- un second circuit intégré non dédié aux opérations bancaires,
- au moins une interface homme-machine, le second circuit intégré étant configuré pour activer au moins une partie de l'interface homme machine en réponse à une consigne de l'utilisateur et selon un algorithme contenu dans le second circuit intégré,
- un espace mémoire connecté au second circuit intégré pour une sauvegarde de données issues de l'exécution dudit algorithme ; cet espace mémoire étant également connecté au premier circuit intégré pour une lecture par ce premier circuit intégré desdites données issues de l'exécution de l'algorithme,
- une batterie d'alimentation du second circuit intégré.

Par circuit intégré dédié aux opérations bancaires, on entend un circuit intégré conçu et configuré pour communiquer avec ou sans contact avec des distributeurs de monnaies, lecteur de carte à puce, borne de paiement ou autre terminal adapté. Un tel circuit intégré est également utilisé pour comptabiliser des points de fidélité vis-à-vis de différents organismes.

L'algorithme selon l'invention peut être tout type d'algorithme interactif homme-machine permettant de stocker des données au sein de l'espace mémoire. A titre d'exemple non limitatif, cet algorithme peut être un jeu électronique tel que loteries, lotos, transposition des jeux de grattages, vidéo-poker, poker sous toutes ses formes y compris formes simplifiées, roulette, black jack, roue de la fortune, machines à sous... On comprendra aisément que la présente invention ne se limite pas à un jeu mais concerne bien une carte électronique qui résout bien au moins un problème technique qui est de réaliser une transmission de données contenues dans une carte électronique interactive vers un terminal de paiement sécurisé.

La présente invention est notamment remarquable, mais pas uniquement, par le fait que l'on intègre dans une même carte une puce d'interactivité homme-machine et une puce d'opérations bancaires, les deux puces ayant accès à un même espace mémoire. De ce fait, on peut utiliser la puce d'opérations bancaires pour valider le résultat d'interactivité homme-machine.

Avec la carte selon l'invention, les données issues de l'exécution de l'algorithme peuvent être transmises par le premier circuit intégré vers un terminal de paiement en bénéficiant de tout le protocole sécuritaire établit pour ce type de transaction.

Lorsque l'algorithme concerne un jeu électronique, les données issues de l'exécution de l'algorithme peuvent être un gain stocké dans l'espace mémoire accessible par le premier circuit intégré. Pour récupérer ce gain, l'utilisateur peut introduire la carte dans un distributeur de billets de façon à ce que ce dernier puisse identifier l'utilisateur par les moyens conventionnels (code PIN) du premier circuit intégré, puis restituer à ce dernier un montant correspondant au gain. Dans le domaine des cartes à puce bancaire, l'espace mémoire peut faire office de porte monnaie électronique. Le gain peut être obtenu sous forme d'argent via un distributeur de billets ou sous forme de crédit bancaire via un terminal de paiement chez un marchand notamment.

Autrement, ce gain peut représenter des points de fidélité qui seront transmis vers un serveur distant après authentification de l'utilisateur en insérant le premier circuit intégré dans un lecteur de carte à puce relié à un ordinateur.

La carte selon l'invention est autonome par sa batterie et peut être paramétrée pour plusieurs cycles d'exécution de l'algorithme. On peut donc exécuter l'algorithme de façon illimitée pendant une période donnée, et de préférence la batterie est ultra mince et flexible. Avantageusement la batterie est également rechargeable. Le format carte bancaire, au standard ISO 7810 ISO 7811, ISO 7816, ISO 14443 ou autres, est un format qui offre bien évidemment une réelle portabilité.

Selon une caractéristique avantageuse de l'invention, l'espace mémoire est intégré dans le premier circuit intégré. De cette façon on utilise un espace mémoire présent dans le premier circuit pour stocker les données issues de l'exécution de l'algorithme. En variante, l'espace mémoire peut être intégré dans le second circuit intégré. Une autre variante préférentielle est que les premier et second circuits intégrés sont déconnectés l'un de l'autre, il n'y a aucune liaison directe entre les deux circuits, et l'espace mémoire est disposé entre ces premier et second circuits intégrés. De cette façon, le seul lien entre les deux circuits intégrés est l'espace mémoire. Ainsi, on préserve le premier circuit intégré de toute tentative de piratage via le second circuit intégré.

Selon un mode de réalisation de l'invention, le premier circuit intégré est configuré pour accéder à l'espace mémoire uniquement en mode lecture. On peut également configurer le second circuit intégré pour qu'il accède à l'espace mémoire uniquement en mode écriture.

Selon une variante avantageuse de l'invention, la carte de paiement peut être réalisée de sorte que :
- le premier circuit intégré est configuré pour alimenter une variable dans l'espace mémoire ; et
- le second circuit intégré est configuré pour exécuter l'algorithme en fonction de la valeur de cette variable.

Avec une telle disposition, la variable peut être alimentée en temps, en nombre de jetons ou en monnaie par exemple. Chaque mise en oeuvre de l'algorithme équivaut à une consommation de la variable. Lorsque la valeur de la variable est insuffisante, l'algorithme n'est plus mis en oeuvre. On peut alimenter ou créditer à nouveau la variable depuis le premier circuit intégré. En d'autres termes, on peut recharger le crédit pour la mise en oeuvre de l'algorithme depuis une borne de carte bancaire, l'espace mémoire étant utilisé comme un porte monnaie électronique.

Avantageusement, le second circuit intégré est configuré pour générer une donnée de validation à partir des données issues de l'exécution de l'algorithme et d'un identifiant dynamique de la carte. Cet identifiant dynamique peut être un nombre fixe associé à un nombre aléatoire. Ce mode de réalisation constitue un autre moyen de validation d'un gain. La donnée de validation peut être transmise vers un terminal ou affichée sur un écran d'affichage de la carte.

Selon une caractéristique avantageuse de l'invention, le second circuit intégré est connecté à une antenne radiofréquence pour la communication avec un terminal distant. De cette façon, on peut transmettre la donnée de validation ou permettre la communication avec un terminal distant pour le téléchargement de fichiers par exemple.

Selon l'invention, l'interface homme-machine peut comprendre des moyens tactiles, visuels et/ou sonores permettant l'interactivité avec l'utilisateur. On peut notamment citer :
- une pluralité de touches destinées à introduire une information ou permettre une activation,
- une membrane piézoélectrique ou buzzer permettant la restitution d'un message vocale, musique ou signature acoustique,
- un ou plusieurs écrans à affichage bistable et/ou souple (par exemple un papier électronique) en tant qu'élément d'affichage pour afficher des informations permettant la restitution, d'un message alpha, numérique, alpha numérique, symbole, pictogramme,
- des diodes électroluminescentes (LEDS) permettant d'indiquer un positionnement, une force, un état.

Selon l'invention, le second circuit peut être connecté à un capteur biométrique pour autoriser ou non l'activation dudit algorithme. Ce capteur biométrique permet d'identifier l'utilisateur à partir de données prédéfinies.

En complément notamment de ce qui précède, on peut envisager la présence d'une bande magnétique sur la carte de paiement. Le second circuit intégré, connecté à cette bande magnétique, peut être configuré de façon à « écrire », c'est-à-dire inscrire une information dans une partie de cette bande magnétique, cette information pouvant ensuite être lue par un lecteur de bande magnétique. Cette information peut avantageusement comprendre les données issues de l'exécution de l'algorithme. Le second circuit intégré peut également être configuré de façon à lire une information qui serait présente dans la bande magnétique de façon à activer ou non l'algorithme en fonction de cette information. On peut envisager à ce que l'espace mémoire comprenne tout ou partie de la bande magnétique.

Bien entendu, les différentes caractéristiques, formes et variantes de réalisation de l'invention peuvent être associées les unes avec les autres selon diverses combinaisons dans la mesure où elles ne sont pas incompatibles ou exclusives les unes des autres.

D'autres avantages et caractéristiques de l'invention apparaîtront à l'examen de la description détaillée d'un mode de mise en oeuvre nullement limitatif, et des dessins annexés, sur lesquels :
La figure 1 est une vue schématique simplifiée de composants internes d'un exemple de réalisation d'une carte selon l'invention,
La figure 2 est un schéma simplifié illustrant un registre de type LFSR,
La figure 3 est un schéma électronique illustrant des diodes électroluminescentes dans une configuration de commande multiplexée, et
La figure 4 est un tableau illustrant la commande mise en oeuvre pour allumer les diodes électroluminescentes de la figure 3.

Bien que l'invention n'y soit pas limitée, on va maintenant décrire une carte de paiement selon l'invention intégrant un jeu électronique de type jeu de roulette.

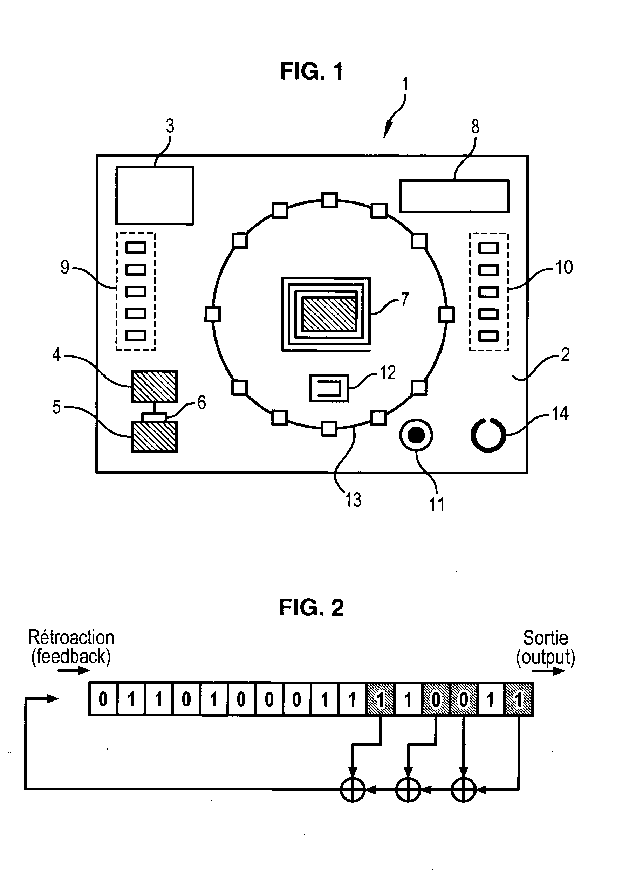

Sur la figure 1, on voit une carte 1 selon l'invention comprenant un support plastique 2 souple au format ISO 7810 dans lequel est encapsulé plusieurs composants électroniques dont une batterie 3 également souple. La batterie délivre un courant de 25mA/h.

Le premier circuit intégré 4 est une puce électronique dédiée aux opérations bancaires.

Le second circuit intégré 5 est un microcontrôleur tel que par exemple le modèle MSP430F2132 de Texas Instruments® qui est conçu pour des applications embarquées à faible consommation et à bas coût, spécialement celles utilisant une batterie. Ce microcontrôleur 5 comprend un espace mémoire représenté schématiquement en 6 qui est également accessible par le premier circuit intégré 4. Dans l'exemple présent, l'algorithme selon l'invention est un programme de jeu de roulette sauvegardé et mis en oeuvre au sein du microcontrôleur 5.

On distingue également une puce RFID 7 et son antenne permettant une liaison directe avec le microcontrôleur 5, ce qui permet d'écrire le nombre de coups joués par l'utilisateur et le gain dans la mémoire 6 de la puce. Ces éléments seront ensuite récupérés via un lecteur via l'antenne RFID 7 ou via le premier circuit intégré 4. Le gain peut avantageusement être affiché sur un écran d'affichage 8. La puce RFID 7 peut être une puce du type EM4134 comportant 512 bits de mémoire et cadencé à une fréquence de 13.56MHz.

On voit une réglette 9 comportant sept dels (diodes électroluminescentes) pour indiquer le nombre de coups joués par l'utilisateur. La réglette 10 comporte 5 dels et permets d'indiquer le gain réalisé par l'utilisateur.

Le fonctionnement de la carte peut être décrit de la manière suivante. Le microcontrôleur 5 contient le programme qui pilote toute la carte. Ce programme peut être codé en C.

Lorsque l'utilisateur appuie sur le bouton on/off 11, la batterie 3 alimente la carte en courant. Le microcontrôleur 5 allume les dels une à la suite de l'autre de façon aléatoire et attend que l'utilisateur appuie sur la pichenette 12 pour engager le jeu, c'est-à-dire la mise en oeuvre de l'algorithme. Si au bout d'une vingtaine de secondes il n'y a pas eu d'action de la part de l'utilisateur, la carte s'éteint pour économiser la batterie.

Lorsque l'utilisateur donne un coup sur la pichenette avant l'extinction de la carte, la roue 13 qui comporte plusieurs dels se met à « tourner », c'est-à-dire que les dels de la roue 13 s'allument successivement de façon à simuler la rotation d'une roue. Puis, la roue 13 s'arrête de « tourner » progressivement jusqu'à s'arrêter sur une des dels au hasard. Cet algorithme d'arrêt aléatoire est généré par un générateur de nombres pseudo-aléatoire. On peut utiliser un registre de type LFSR pour « linear feedback shift register » en langue anglaise. Il s'agit d'un registre à décalage comme représenté sur la figure 2 avec rétroaction linéaire où un ou plusieurs bits en sortie subissent des opérations/transformations comme un « ou » exclusif par exemple avant d'être réinsérés dans le registre. Ce registre peut être implémenté C et intégré au programme du microcontrôleur 5.

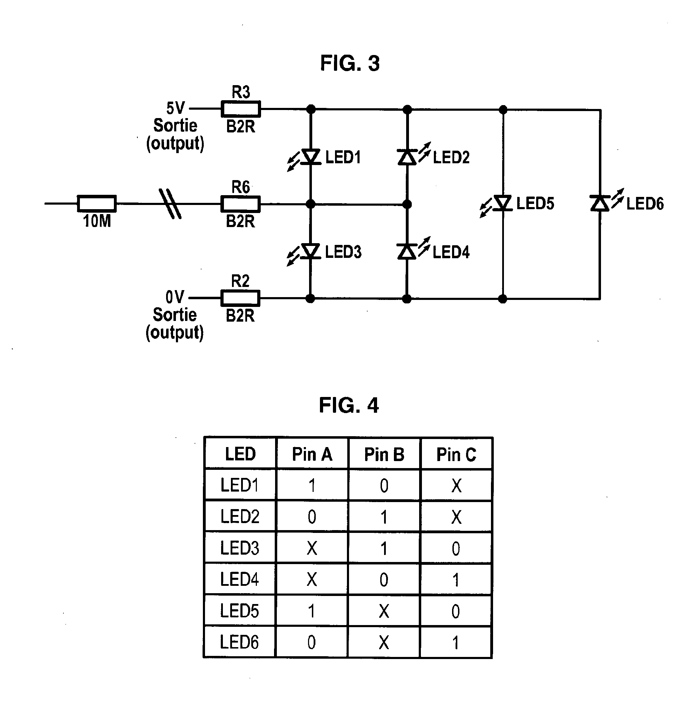

Cet algorithme permet de définir aléatoirement la del qui s'allumera lorsque la roue s'arrêtera de tourner. Dans l'exemple décrit, on dispose de 24 dels au total sur la carte. Lorsqu'on utilise par exemple un microcontrôleur ne disposant que de 24 entrées/sorties (I/O) et que toutes ne sont pas utilisées pour les dels, on réalise avantageusement un multiplexage. Pour ce faire, on utilise la méthode dite de « charlieplexing ». Cette méthode permet grâce à n I/O de piloter n(n-1) dels. Un exemple est donné pour trois I/O sur la figure 3 avec six dels qui s'allument suivant les valeurs définies dans le tableau de la figure 4.

Lorsque la roue 13 s'arrête, une première del de la réglette 9 s'allume signifiant que le joueur a joué son premier coup. Une del correspondant au gain obtenu sur la roue s'allume sur la réglette 10 des gains. Au deuxième coup, une deuxième del s'allume sur la réglette 9 des coups et le gain correspondant s'allume sur celle des gains, et ainsi de suite.

On peut sauvegarder dans l'espace mémoire 6 une valeur numérique représentant le gain obtenu ou bien sauvegarder une valeur de validation au format alphanumérique et qui est une combinaison de la valeur du gain avec un identifiant dynamique de la carte. Cette combinaison est réalisée par le microcontrôleur.

Pour récupérer son gain, l'utilisateur peut par exemple :
- se rendre chez un marchand possédant un terminal dédié pour lire le contenu de la mémoire 6 soit via l'antenne RFID, via le premier circuit intégré 4 lorsque ce terminal est un terminal de paiement, soit via une membrane piézoélectrique 14 émettant une séquence sonore pour le réseau téléphonique ;
- utiliser un distributeur de billets en insérant le premier circuit intégré 4 qui est également une puce pour carte bancaire, et en composant le code PIN associé à sa carte bancaire ;
- envoyer la donnée de validation via Internet vers un serveur dédié pour recueillir des données de validation, cet envoi pouvant se faire via un lecteur de carte à puce relié à un ordinateur, par saisie de la donnée de validation, ou par la membrane piézoélectrique 14.

Bien sûr, l'invention n'est pas limitée aux exemples qui viennent d'être décrits et de nombreux aménagements peuvent être apportés à ces exemples sans sortir du cadre de l'invention.

## Revendications

1. Carte de paiement (1) constituée par un support (2) au format d'une carte bancaire de paiement conventionnelle, et comprenant :
- un premier circuit intégré (4) dédié aux opérations bancaires,
- au moins une interface homme-machine,
- un espace mémoire (6) et
une batterie (3) d'alimentation,
**caractérisée en ce qu'**elle comprend en outre :
- un second circuit intégré (5) non dédié aux opérations bancaires, ce second circuit intégré (5) étant configuré pour activer au moins une partie de l'interface homme machine (8, 9, 10) en réponse à une consigne de l'utilisateur et selon un algorithme contenu dans le second circuit intégré,
- et **en ce que** l'espace mémoire (6) est connecté au second circuit intégré (5) pour une sauvegarde de données issues de l'exécution dudit algorithme ; cet espace mémoire (6) étant également connecté au premier circuit intégré (4) pour une lecture desdites données issues de l'exécution de l'algorithme, et
- **en ce que** la batterie (3) d'alimentation alimente le second circuit intégré (5).

2. Carte selon la revendication 1, **caractérisée en ce que** l'espace mémoire (6) est intégré dans le premier circuit intégré (4).

3. Carte selon la revendication 1, **caractérisée en ce que** l'espace mémoire (6) est intégré dans le second circuit intégré (5).

4. Carte selon la revendication 1, **caractérisée en ce que** les premier et second circuits intégrés (4, 5) sont déconnectés l'un de l'autre, et l'espace mémoire (6) est disposé entre ces premier et second circuits intégrés.

5. Carte selon l'une quelconque des revendications précédentes, **caractérisée en ce que** le premier circuit intégré (4) est configuré pour accéder à l'espace mémoire (6) uniquement en mode lecture.

6. Carte selon l'une quelconque des revendications précédentes, **caractérisée en ce que** le second circuit intégré (5) est configuré pour accéder à l'espace mémoire (6) uniquement en mode écriture.

7. Carte selon l'une quelconque des revendications 1-4, **caractérisée en ce que** :
- le premier circuit intégré (4) est configuré pour alimenter une variable dans l'espace mémoire (6) ; et
- le second circuit intégré (5) est configuré pour exécuter l'algorithme en fonction de la valeur de cette variable.

8. Carte selon l'une quelconque des revendications précédentes, **caractérisée en ce que** le second circuit intégré (5) est configuré pour générer une donnée de validation à partir des données issues de l'exécution de l'algorithme et d'un identifiant dynamique de la carte (1).

9. Carte selon la revendication 8, **caractérisée en ce que** l'identifiant dynamique est un nombre fixe associé à un nombre aléatoire.

10. Carte selon l'une quelconque des revendications précédentes, **caractérisée en ce que** le second circuit intégré (5) est connecté à une antenne radiofréquence (7) pour la communication avec un terminal distant.

11. Carte selon l'une quelconque des revendications précédentes, **caractérisée en ce que** l'interface homme-machine (8, 9, 10) comprend des moyens tactiles, visuels et/ou sonores permettant l'interactivité avec l'utilisateur.

12. Carte selon l'une quelconque des revendications précédentes, **caractérisée en ce que** la batterie (3) est de type rechargeable.

13. Carte selon l'une quelconque des revendications précédentes, **caractérisée en ce que** le second circuit (5) est connecté à un capteur biométrique pour autoriser ou non l'activation dudit algorithme.

14. Carte selon l'une quelconque des revendications précédentes, **caractérisée en ce qu'**elle comprend une bande magnétique connectée au moins au second circuit intégré (5).

## Patentansprüche

1. Zahlungskarte (1), die aus einem Träger (2) im Format einer konventionellen Zahlungs- bzw. Bankkarte besteht und enthält:
- einen ersten integrierten Schaltkreis (4), der für Bankgeschäfte bestimmt ist,
- zumindest eine Mensch-Maschine-Schnittstelle,
- einen Speicherraum (6) und
- eine Versorgungsbatterie (3),
**dadurch gekennzeichnet, dass** sie ferner enthält:
- einen zweiten integrierten Schaltkreis (5), der nicht für Bankgeschäfte bestimmt ist, wobei dieser zweite integrierte Schaltkreis (5) dazu ausgelegt ist, zumindest einen Teil der Mensch-Maschine-Schnittstelle (8, 9. 10) in Antwort auf eine Anweisung des Nutzers und gemäß einem Algorithmus zu aktivieren, der in dem zweiten integrierten Schaltkreis enthalten ist,
- und dass der Speicherraum (6) mit dem zweiten integrierten Schaltkreis (5) zwecks Sicherung von Daten verbunden ist, die von der Ausführung des Algorithmus stammen; wobei dieser Speicherraum (6) auch mit dem ersten integrierten Schaltkreis (4) zwecks Lesen der von der Ausführung des Algorithmus stammenden Daten verbunden ist, und
- dass die Versorgungsbatterie (3) den zweiten integrierten Schaltkreis (5) versorgt.

2. Karte nach Anspruch 1, **dadurch gekennzeichnet, dass** der Speicherraum (6) in dem ersten integrierten Schaltkreis (4) integriert ist.

3. Karte nach Anspruch 1, **dadurch gekennzeichnet, dass** der Speicherraum (6) in dem zweiten integrierten Schaltkreis (5) integriert ist.

4. Karte nach Anspruch 1, **dadurch gekennzeichnet, dass** der erste und der zweite integrierte Schaltkreis (4, 5) voneinander getrennt sind und der Speicherraum (6) zwischen diesem ersten und diesem zweiten integrierten Schaltkreis angeordnet ist.

5. Karte nach einem der vorangehenden Ansprüche, **dadurch gekennzeichnet, dass** der erste integrierte Schaltkreis (4) dazu ausgelegt ist, nur im Lesemodus auf den Speicherraum (6) Zugriff zu haben.

6. Karte nach einem der vorangehenden Ansprüche, **dadurch gekennzeichnet, dass** der zweite integrierte Schaltkreis (5) dazu ausgelegt ist, nur im Schreibmodus auf den Speicherraum (6) Zugriff zu haben.

7. Karte nach einem der Ansprüche 1 - 4, **dadurch gekennzeichnet, dass**
- der erste integrierte Schaltkreis (4) dazu ausgelegt ist, eine Variable im Speicherraum (6) zu versorgen; und
- der zweite integrierte Schaltkreis (5) dazu ausgelegt ist, den Algorithmus in Abhängigkeit von dem Wert dieser Variablen auszuführen.

8. Karte nach einem der vorangehenden Ansprüche, **dadurch gekennzeichnet, dass** der zweite integrierte Schaltkreis (5) dazu ausgelegt ist, eine Validierungsdatenangabe ausgehend von den Daten, die von der Ausführung des Algorithmus stammen, und von einer dynamischen Kennung der Karte (1) zu erzeugen.

9. Karte nach Anspruch 8, **dadurch gekennzeichnet, dass** die dynamische Kennung eine feste Zahl ist, die einer Zufallszahl zugeordnet ist.

10. Karte nach einem der vorangehenden Ansprüche, **dadurch gekennzeichnet, dass** der zweite integrierte Schaltkreis (5) mit einer Hochfrequenzantenne (7) zur Kommunikation mit einem entfernt liegenden Terminal verbunden ist.

11. Karte nach einem der vorangehenden Ansprüche, **dadurch gekennzeichnet, dass** die Mensch-Maschine-Schnittstelle (8, 9, 10) berührungsempfindliche, visuelle und/oder akustische Mittel enthält, welche die Interaktivität mit dem Nutzer gestatten.

12. Karte nach einem der vorangehenden Ansprüche, **dadurch gekennzeichnet, dass** die Batterie (3) wiederaufladbar ausgeführt ist.

13. Karte nach einem der vorangehenden Ansprüche, **dadurch gekennzeichnet, dass** der zweite Schaltkreis (5) mit einem biometrischen Sensor verbunden ist, um die Aktivierung des Algorithmus zu genehmigen oder nicht zu genehmigen.

14. Karte nach einem der vorangehenden Ansprüche, **dadurch gekennzeichnet, dass** sie einen Magnetstreifen enthält, der zumindest mit dem zweiten integrierten Schaltkreis (5) verbunden ist.

## Claims

1. Payment card (1) constituted by a support (2) in the format of a conventional bank payment card, and comprising
- a first integrated circuit (4) dedicated to banking operations,
- at least one human-machine interface,
- a memory space (6) and
- a powering battery (3),
**characterized in that** it also comprises:
- a second integrated circuit (5) not dedicated to banking operations, this second integrated circuit (5) being configured so as to activate at least one part of the human-machine interface (8, 9, 10) in response to an instruction from the user and according to an algorithm contained in the second integrated circuit,
- and **in that** the memory space (6) is connected to the second integrated circuit (5) for saving data originating from the execution of said algorithm; this memory space (6) being also connected to the first integrated circuit (4) for reading said data originating from the execution of the algorithm, and
- **in that** the powering battery (3) powers the second integrated circuit (5).

2. Card according to claim 1, **characterized in that** the memory space (6) is incorporated in the first integrated circuit (4).

3. Card according to claim 1, **characterized in that** the memory space (6) is incorporated in the second integrated circuit (5).

4. Card according to claim 1, **characterized in that** the first and second integrated circuits (4, 5) are disconnected from one other, and the memory space (6) is arranged between these first and second integrated circuits.

5. Card according to any one of the previous claims, **characterized in that** the first integrated circuit (4) is configured in order to access the memory space (6) in read-only mode.

6. Card according to any one of the previous claims, **characterized in that** the second integrated circuit (5) is configured in order to access the memory space (6) in write-only mode.

7. Card according to any one of claims 1-4, **characterized in that**:
- the first integrated circuit (4) is configured so as to supply a variable in the memory space (6); and
- the second integrated circuit (5) is configured so as to execute the algorithm as a function of the value of this variable.

8. Card according to any one of the previous claims, **characterized in that** the second integrated circuit (5) is configured so as to generate validation data based on the data originating from the execution of the algorithm and a dynamic identifier of the card (1).

9. Card according to claim 8, **characterized in that** the dynamic identifier is a fixed number associated with a random number.

10. Card according to any one of the previous claims, **characterized in that** the second integrated circuit (5) is connected to a radiofrequency antenna (7) for communication with a remote terminal.

11. Card according to any one of the previous claims, **characterized in that** the human-machine interface (8, 9, 10) comprises tactile, visual and/or sound means allowing interactivity with the user.

12. Card according to any one of the previous claims, **characterized in that** the battery (3) is of rechargeable type.

13. Card according to any one of the previous claims, **characterized in that** the second circuit (5) is connected to a biometric sensor in order to authorize or not authorize the activation of said algorithm.

14. Card according to any one of the previous claims, **characterized in that** it comprises a magnetic strip connected at least to the second integrated circuit (5).
